# EUROPÄISCHE PATENTANMELDUNG

(11) **EP 0 580 569 A2**
(43) Veröffentlichungstag der Anmeldung: **26.01.1994**
(21) Anmeldenummer: 93890145.1
(22) Anmeldetag: 21.07.1993
(51) Int. Cl.: A61C 19/00, B08B 9/06

(54) **Vorrichtung zum Reinigen dentaler Handwerkzeuge**

(30) Priorität: 22.07.1992 AT 1500/92
(71) Anmelder: DENTALWERK BÜRMOOS GESELLSCHAFT M.B.H., A-5111 Bürmoos (AT)
(72) Erfinder: Eibl, Johann, Dipl.-Ing., A-5230 Mattighofen (AT); Malata jun., Peter, Dipl.-Ing., A-5111 Bürmoos (AT)
(74) Vertreter: Barger, Werner, Dipl.-Ing.

(57) **Zusammenfassung**

Die Erfindung betrifft ein Reinigungsgerät für dentale Instrumente, die auf einen Instrumentenanschluß (17) aufsetzbar sind und mit Öl und/oder Reinigungsmittel, gegebenenfalls in Form eines Sprühnebels, durchgeblasen und anschließend mit Druckluft trockengeblasen werden, wobei gegebenenfalls eine Mitnehmereinrichtung (20) zum Antreiben der beweglichen Instrumententeile vorgesehen ist.

Erfindungsgemäß ist vorgesehen, daß daß die Steuerung bzw. Regelung der verschiedenen Reinigungsphasen und der Transport der Reinigungsflüssigkeiten pneumatisch erfolgt.

Bevorzugt wird durch einen Druckluftstoß zumindest ein Kolben (5) gegen eine Feder (6) verschoben, wodurch Öl und/oder Reinigungsmittel in das Instrument gedrückt wird und wobei eine Steuerkante des Kolbens (5) durch das Verlassen der Kolbenruhelage eine Verbindung zwischen der Druckluftversorgung (1) und dem Instrumentenanschluß (17) herstellt, wobei bei Bewegungsumkehr des Kolbens unter der Wirkung der Feder (6) nach dem Ende des Druckluftstoßes die Förderung des Öls und/oder Reinigungsmittels unterbrochen, die Zuleitung von Druckluft aber bis zum Wiedererreichen der Kolbenruhelage aufrechterhalten wird.

## Beschreibung

Die Erfindung betrifft eine Vorrichtung zum Reinigen dentaler Handwerkzeuge.

Derartige Vorrichtungen sind bereits verschiedentlich auf dem Markt, beispielsweise das elektrisch betriebene Gerät Rotosuc der Dental Festin GmbH & Co. KG. aus der BRD. Dieses Geräte pumpt eine halbe Sekunde lang Pflegeöl mit höherem Druck und anschließend etwa 20 Sekunden lang Luft mit niedrigerem Druck durch die Instrumente. So wird das Pflegeöl in alle Hohlräume, Ecken und Getriebeteile des Instrumentes gepreßt, Verunreinigungen werden weggespült und ein Ölfilm verbleibt zur Schmierung in den Lagern und zwischen den Zahnrädern. Die Verteilung des Pflegeöls in den Instrumenten wird noch dadurch verstärkt, daß die Hand- und Winkelstücke während der Behandlung verdreht werden, wobei im Gegensatz zum normalen Betrieb, die Innenteile stehen bleiben und die Außenteile rotieren.

Das Gerät Turbocid der Orochem Chemie AG in der Schweiz reinigt, desinfiziert und schmiert dentale Instrumente. Dazu werden die langsam rotierenden Instrumente mit kaltem Wasser unter Druck gespült, wodurch sämtliche inneren Oberflächen gereinigt und die Instrumente ausgewaschen werden. Anschließend wird in den Instrumenten verbliebenes Spülmittel mit Druckluft ausgeblasen. In der Folge werden die langsam rotierenden Instrumente unter Druck mit einem Spezialdesinfektionsmittel desinfiziert. Anschließend wird das Desinfektionsmittel ausgeblasen. Schließlich wird Schmieröl eingebracht und das überschüssige Schmieröl ebenfalls ausgeblasen. Die äußeren Oberflächen der Instrumente werden durch Besprühen ebenfalls desinfiziert und mit Druckluft getrocknet. Die Steuerung der diversen Vorgänge erfolgt elektronisch, es können bis zu vier Instrumente gleichzeitig behandelt werden.

Aus der EP-A2-0 300 945 ist ein Apparat bekannt, bei dem Dentalinstrumente von mehreren Flüssigkeiten durchspült werden, wonach Luft zum Trocknen und schließlich Schmieröl in die Instrumente geblasen werden. Während der Behandlung werden die beweglichen Teile der Instrumente gedreht, um die Reinigung zu verbessern. Die Flüssigkeiten werden mittels Druckluft von Behältern zu den Instrumenten gedrückt, wobei die Druckluft dem Gerät von außen zugeführt wird. Die Steuerung der Druckluft zu den einzelnen Flüssigkeitsbehältern bzw. zu den Instrumenten direkt, erfolgt mittels Elektroventilen. Der ganze Zyklus wird elektronisch gesteuert und kann vom Benutzer in seinem Ablauf verändert werden.

Es sind auf dem Gebiete der Pflege von dentalen Instrumenten auch Handgeräte bekannt geworden, mit denen jeweils ein Instrument gereinigt werden kann, doch sind diese Geräte entweder aufwendig in der Bedienung oder eingeschränkt in ihren Möglichkeiten, sodaß sie sich nicht am Markt durchgesetzt haben.

Die vorbekannten Standgeräte haben alle gemeinsam, daß sie zur Steuerung der Pflegeabfolge eine elektronische Schaltung benutzen, über die verschiedene Magnet- oder Elektroventile angesprochen werden und daß diese Vorrichtungen daher kompliziert und aufwendig aufgebaut sind, wobei vor allem das eng benachbarte Nebeneinander von verschiedenen Flüssigkeiten und elektrischem Strom im Zusammenhang mit elektronischen Bauteilen problematisch ist. Dazu kommen noch die Probleme mit der Anpassung an diverse Landesvorschriften und Normen, was die vorbekannten Standgeräte teuer macht.

Es ist das Ziel der Erfindung, diese Nachteile zu vermeiden und eine Vorrichtung zum Reinigen zahnärztlicher Instrumente anzugeben, die robust, einfach und eigensicher ist und dennoch, die gleichen Reinigungsverfahren wie die vorbekannten Geräte ausführen kann.

Erfindungsgemäß werden diese Ziele dadurch erreicht, daß die Steuerung bzw. Regelung der verschiedenen Reinigungsphasen und der Transport der Reinigungsflüssigkeiten pneumatisch erfolgt. Dabei kann die benötigte Druckluft bevorzugt vom zahnärztlichen Behandlungsstuhl zugeführt werden. Die pneumatische Steuerung kann durch pneumatische Ventile erfolgen, die nach Erhalt eines Druckimpulses eine Leitung für eine vorbestimmte, gegebenenfalls einstellbare Zeit freigeben. Der Flüssigkeitstransport kann beispielsweise durch pneumatisch betriebene Pumpen oder durch federbelastete Kolben, wie weiter unten beschrieben, erfolgen.

In einer Ausgestaltung ist vorgesehen, daß Druckluft von einer externen oder internen Versorgung über ein händisch betätigtes Ventil einem Kolben einer Regeleinrichtung beaufschlagt wird und diesen gegen die Kraft einer Feder bis zum Erreichen eines Anschlages (unterer Totpunkt) verschiebt, wobei durch diese Kolbenverschiebung Öl und/oder Reinigungsmittel in vorgegebener Menge aus Vorratsbehältern durch Leitungen zu zumindest einer Anschlußstelle für zumindest ein Instrument und, mit Druckluft gemischt, in die Instrumente gedrückt wird. Durch Steuerkanten des Kolbens wird die Druckluftversorgung mit einer Druckluftleitung, die zur Anschlußstelle führt, verbunden, solange der Kolben nicht seine Ausgangslage (oberer Totpunkt) einnimmt.

Nach Beendigung der Druckluftzufuhr zur Regeleinrichtung wird der Kolben von der Feder zurück in seine Ausgangslage gebracht. Die Druckluft treibt auch eine Turbine der Vorrichtung an, die ihrerseits wieder mechanisch mit einem Antriebsorgan für die beweglichen Teile des zu reinigenden Instrumentes verbunden ist, sodaß die beweglichen Teile des Instrumentes während des Einblasens des Öls tatsächlich bewegt werden. Die Reinigungsflüssigkeit wird in die fluidführenden Kanäle des Instrumentes eingepreßt.

Von der Luftzufuhr zweigt hinter der Steuerkante des Kolbens zur Turbine im Bereich der Anschlußstelle je eine Leitung ab, die mit den Anschlußöffnungen des Instrumentes verbunden ist und in die die Leitungen für das Öl bzw. das Reinigungsmittel münden. So wird das Instrument, soweit es über bewegliche Teile verfügt, bewegt und während des Anfangs der Reinigungsphase wird ein Öl- bzw. Reinigungsmittelsprühnebel durch die Druckluft gebildet und durch die entsprechenden Hohlräume geblasen. Nach Erreichen des unteren Totpunktes des Kolbens wird kein Öl bzw. Reinigungsmittel mehr gefördert, wodurch der Sprühnebel automatisch durch (reine) Druckluft ersetzt und das Gerät Trockengeblasen wird.

Wenn handärztliche Turbinen gereinigt werden sollen, deren bewegliche Teile durch Druckluft in Bewegung versetzt werden und nicht durch mechanische Kupplung (Turbinen), so wird ein Adapter auf die geräteseitige Aufsteckvorrichtung aufgesetzt, wodurch die von der (Vorrichtungs-) Turbine kommende Druckluft in das Turbinenhandstück eingeleitet wird und dort ein Umlaufen der (Handstück-) Turbine und somit eine verbesserte Reinigung bewirkt.

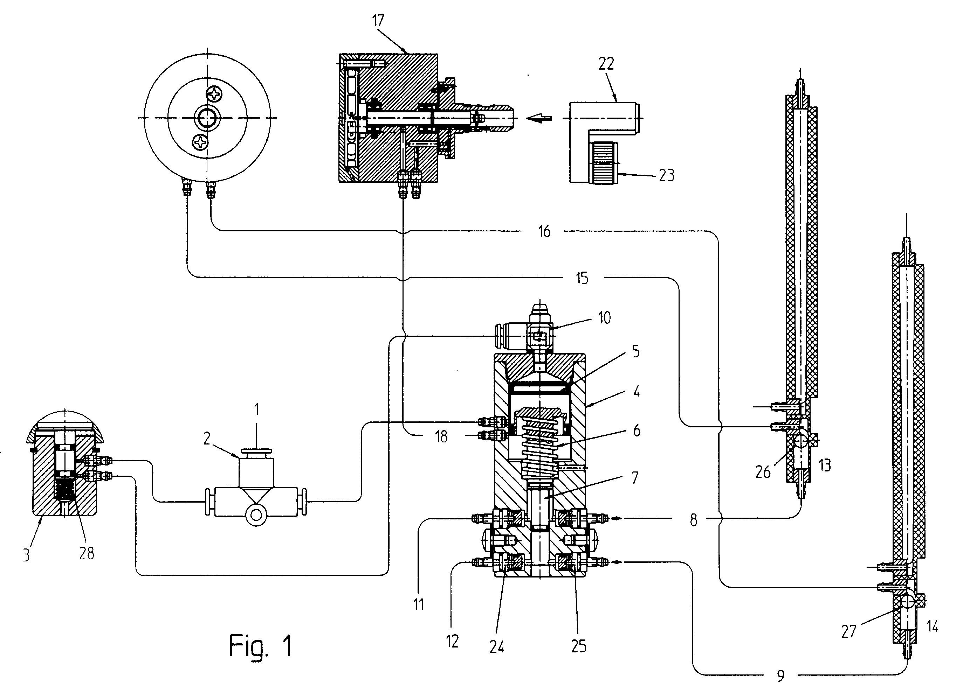

Die Erfindung wird an Hand der beiliegenden Zeichnung näher erläutert:
Dabei stellt Fig. 1 ein pneumatisches bzw. hydraulisches Schaltschema einer Variante der erfindungsgemäßen Vorrichtung dar, bei dem einzelne Bauteile detailliert eingezeichnet sind und

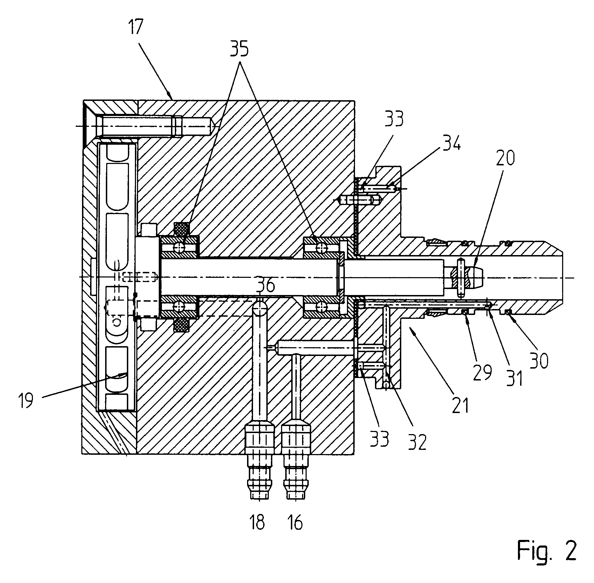

Fig. 2 zeigt den Instrumentenanschluß im vergrößerten Maßstab im Detail.

Wie aus Fig. 1 ersichtlich, wird externe Druckluft dem Gerät bei 1 zugeführt und gelangt in ein T-Stück, in dem gegebenenfalls eine Druckreduktion und/oder eine Reinigung durch ein eingesetztes Filter stattfindet. Vom T-Stück 2 gelangt Druckluft über eine Leitung zu einem Betätigungsknopf 3, dessen Niederpressen den Reinigungsvorgang startet.

Wird der Knopf 3 gegen die Kraft einer Feder 28 nach unten gedrückt, so werden die Druckluftzuleitung und die weiterführende Leitung miteinander während relativ kurzer Zeit verbunden, wodurch Druckluft vom T-Stück 2 über den Betätigungsknopf 3 zum Kopf 10 einer Regeleinrichtung 4 gelangt.

Im Inneren der Regeleinrichtung 4 befindet sich ein Kolben 5, der von einer Feder 6 nach oben, gegen den Kopf 10 der Regeleinrichtung 4 gepreßt wird. Beim Beaufschlagen mit Druckluft wird der Kolben 5 gegen die Wirkung der Feder 6 nach unten gedrückt, wobei seine als zweifacher Kolben ausgebildete Kolbenstange 7, Öl in die Leitung 8 und Reinigungsmittel in die Leitung 9 preßt. Ein Rückfließen der beiden Fluide in die Leitungen 11 bzw. 12 wird durch Rückschlagventile 24 und 25 in der Reinigungsmittelleitung 9 und durch zwei nicht mit Bezugszeichen versehene analoge Rückschlagventile in der Ölleitung 8 verhindert.

Nach dem Loslassen des Betätigungsknopfes 3 drückt die im Betätigungsorgan vorhandene Feder 28 den Betätigungsknopf samt Kolben wieder nach oben, wodurch die Druckluftzufuhr zum Kopf 10 der Regeleinrichtung 4 unterbrochen wird. Unter der Wirkung der Feder 6 wird der Kolben 5 nach oben gedrückt, wobei im Kopf 10 eine Entlüftung vorgesehen ist, die die Geschwindigkeit des Kolbens 5 begrenzt.

Diese Entlüftung ist in einer Ausführungsform, in der sie direkt nach Außen mündet, auch während der Druckluftzufuhr geöffnet, doch strömt aus ihr so wenig Luft aus, daß es die Bewegung des Kolbens gegen die Feder 6 nicht beeinträchtigt.

In der gezeigten Variante ist die Entlüftung zwischen dem Kopf 10 der Regeleinrichtung 4 und der Druckluftzuleitung vom Betätigungsknopf 3 her vorgesehen, sodaß die Entlüftung über die Bohrung, in der die Feder 28 sitzt, erfolgt.

Im Zuge der nunmehr nach oben gerichteten Bewegung des Kolbens 5 saugen die beiden Kolbenabschnitte der Kolbenstange 7 Öl aus der Leitung 11 bzw. Reinigungsmittel aus der Leitung 12 aus entsprechenden Behältern an, wobei die Rückschlagventile 24, 25 in der Reinigungsmittelleitung 9, 12 (und die beiden nicht indizierten Rückschlagventile in der Ölleitung 8, 11) mit den Hubräumen der Kolbenstange 7 für die Einhaltung der Bewegungsrichtung des Öls bzw. des Reinigungsmittels sorgen.

Das Öl bzw. das Reinigungsmittel gelangt durch eine Anzeige 13, 14 und weiterführende Leitungen 15, 16 zum Instrumentenanschluß 17. Dem Instrumentenanschluß 17 wird auch Druckluft zugeführt, die vom T-Stück 2 über die Regeleinrichtung 4 und die Zufuhrleitung 18 geleitet wird.

Dabei sorgt eine Steuerfläche des Kolbens 5 in der Regeleinrichtung 4 dafür, daß die Leitung 18 immer dann mit Druckluft vom T-Stück 2 beaufschlagt ist, wenn der Kolben 5 von seiner Ruhelage am kopfseitigen Totpunkt entfernt ist.

Im Instrumentenanschluß 17 verzweigt die Druckluftleitung 18 und treibt über einen ihrer Leitungsäste eine Turbine 19 an, die auf einer Welle sitzt, deren instrumentenseitiges Ende 20 mit einem genormten Mitnehmer für zahnärztliche Instrumente versehen ist.

Entweder über diese Antriebsluft (die dabei durch die Lager der Welle strömt) oder, bevorzugt, über eine weitere, in Fig. 2 nicht sichtbare Abzweigung von der Druckluftleitung 18 wird der Innenraum des zahnärztlichen Instrumentes, der die beweglichen Teile enthält, mit einem Öl-Sprühnebel versorgt, der durch das Einmünden der Ölleitung 15 in einen entsprechenden Zweig der Druckluftleitung 18 gebildet wird.

Analog wird durch Zusammenführen eines Astes der Druckluftleitung 18 mit der Reinigungsmittelleitung 16 ein Reinigungssprühnebel gebildet, der über eine Verzweigung 21, die normgemäß zwischen O-Ringen 29, 30 des Instrumentenanschlusses 17 bei 31 mündet, mit allen Einlässen von Fluidkanälen eines zahnärztlichen Instrumentes verbunden wird (Kühlwasser, Kühlluft, Rücksaugleitung etc.).

Soll ein zahnärztliches Instrument gereinigt werden, das über einen eigenen Antrieb in Form einer Luftturbine verfügt, so wird ein Adapter 22 auf den Instrumentenschluß 17 aufgeschoben, der bei 23 mit einer Aufnahme für Turbinen versehen ist. Dabei treibt die mit einem Ölnebel durchsetzte Druckluft die handstückseitige Turbine an, so daß auch diese während des Reinigungsvorganges bewegt wird.

Beim gezeigten Ausführungsbeispiel ist einstückig mit den Schaugläsern 13, 14, die durch Bewegung von Kugeln 26, 27
das Strömen des Öls bzw. Reinigungsmittels anzeigen, je ein Füllstandsanzeiger verbunden, der es dem Benutzer ermöglicht, mit einem Blick festzustellen, ob die Vorrichtung mit genügend Reinigungsmittel bzw. Öl versehen ist.

Aus Fig. 2 ist eine Besonderheit ersichtlich, die es ermöglicht, ein Handgerät auch außen zu reinigen: Von der Leitung, in der der Reinigungssprühnebel zum Austritt 31 gelangt, zweigt eine Nebenleitung 32 zu einem Ringkanal 33, der konzentrisch zur Welle der Turbine 19 verläuft, ab. In regelmäßigen Abständen gehen Bohrungen 34 vom Ringkanal zur Stirnfläche des Instrumentenanschlusses und bilden dort Düsen, aus denen der Reinigungsmittelsprühnebel auf die Außenseite des Instrumentes gesprüht wird.

Um zu verhindern, daß Ölhältige oder kontaminierte Luft in den Bereich der Lager 35 der Welle gelangt, ist eine Verbindung 36 zwischen der Druckluftzufuhr 18 und dem Wellenringspalt zwischenden Lagern 35 vorgesehen. Diese Dichtung ist natürlich nur anwendbar, wenn nicht die von der Turbine 19 kommende Luft in das Instrumenteninnere geleitet wird.

Die Erfindung ist nicht auf das beschriebene oder dargestellte Ausführungsbeispiel beschränkt, sondern kann verschiedentlich abgewandelt werden.

So kann die Regelung, wie eingangs erwähnt, durch Zeitschaltventile erfolgen, wobei der Transport des Reinigungsmittels und/oder Öl's auch durch Druckbeaufschlagung der Vorratsbehälter bewerkstelligt werden kann. Analog zum gezeigten Ausführungsbeispiel würde ein Druckluftimpuls vom Schalter 3 zu zumindest einem Zeitschaltventil geleitet werden.

Bei der bevorzugten Variante werden drei parallel geschaltete Zeitschaltventile vorgesehen, wobei zwei Zeitschaltventile den Transport der Flüssigkeiten bewirken und das dritte Zeitschaltventil, mit einer längeren Öffnungszeit, die Zuleitung der Druckluft zum Handwerkzeug regelt. Dadurch wird eine individuell leicht einstellbare und veränderbare Reinigungssequenz möglich.

Die Druckluft kann bei allen Varianten der Erfindung auch durch einen im Gerät vorgesehenen Kompressor geliefert werden, ohne die eingangs erwähnten Nachteile einzuhandeln, da diese Geräte wesentlich robuster sind als die elektronischen Steuerkreise.

Es ist auch möglich, mehrere Anschlußstellen für Instrumente vorzusehen oder für verschiedene fluidführende Kanäle der Instrumente verschiedene Reinigungsmittel zu verwenden, was im gezeigten Ausführungsbeispiel durch eine weitere Ausgestaltung der Kolbenstange 7 ein Leichtes ist.

Auch ist es möglich, den Querschnitt der Ausblasöffnung am Kopf 10 der Regeleinrichtung 4 regelbar (Nadelventil) auszugestalten, um für verschiedene Verschmutzungsgrade Vorkehrungen zu treffen.

Es ist auch nicht notwendig, daß die drei Kolben auf einer Kolbenstange sitzen, auch wenn diese Ausführungsform besonders robust und platzsparend ist. Durch mehrere, getrennte Kolben (mit Steuerkanten) ist es möglich, für die einzelnen Fluide unterschiedliche Steuerkennlinien zu verwirklichen.

## Patentansprüche

1. Reinigungsgerät für dentale Instrumente, die auf einen Instrumentenanschluß aufsetzbar sind und mit Öl und/oder Reinigungsmittel, gegebenenfalls in Form eines Sprühnebels, durchgeblasen und anschließend mit Druckluft trockengeblasen werden, wobei gegebenenfalls eine Mitnehmereinrichtung zum Antreiben der beweglichen Instrumententeile vorgesehen ist, dadurch gekennzeichnet, daß die Steuerung bzw. Regelung der verschiedenen Reinigungsphasen und der Transport der Reinigungsflüssigkeiten pneumatisch erfolgt.

2. Vorrichtung nach Anspruch 1, dadurch gekennzeichnet, daß durch einen kurzzeitigen Druckluftstoß zumindest ein Kolben (5) gegen die Kraft einer Feder (6) verschoben wird, wobei durch die Kolbenbewegung Öl und/oder Reinigungsmittel in vorbestimmter Menge in das zu reinigende Instrument gedrückt wird und wobei eine Steuerkante des Kolbens (5) durch das Verlassen der Kolbenruhelage eine Verbindung zwischen der Druckluftversorgung (1) und dem Instrumentenanschluß (17) herstellt, wobei nach Erreichen des unteren Totpunktes des Kolbens nach dem Ende des Druckluftstoßes die Förderung des Öls und/oder Reinigungsmittels unterbrochen, die Zuleitung von Druckluft aber bis zum Wiedererreichen der Kolbenruhelage (oberer Totpunkt) aufrechterhalten wird.

3. Vorrichtung nach Anspruch 2, dadurch gekennzeichnet, daß die Geschwindigkeit des Kolbens (5) unter der Wirkung der Feder (6) durch den Querschnitt einer Entlüftungsöffnung am Kopf (10) der Regeleinrichtung (4) bestimmt wird.

4. Vorrichtung nach Anspruch 3, dadurch gekennzeichnet, daß der Querschnitt der Entlüftungsöffnung regelbar ist.

5. Vorrichtung nach einem der Ansprüche 2 bis 4, dadurch gekennzeichnet, daß der Druckstoß durch Verschieben eines Kolbens einer Betätigungseinrichtung (3) gegen die Kraft einer Feder ausgelöst wird.

6. Vorrichtung nach einem der vorstehenden Ansprüche, dadurch gekennzeichnet, daß die Mitnehmereinrichtung (20) für die beweglichen Instrumententeile durch eine druckluftbetriebene Turbine (19) im Instrumentenanschluß (17) angetrieben wird.

7. Vorrichtung nach einem der vorstehenden Ansprüche, dadurch gekennzeichnet, daß zum Reinigen von dentalen Instrumenten mit Luftturbinen ein Adapter (22) vorgesehen ist, der die Luft von der Turbine (19) in die entsprechende Zuleitung des Instrumentes leitet.

8. Vorrichtung nach einem der vorstehenden Ansprüche, dadurch gekennzeichnet, daß die benötigte Druckluft vom zahnärztlichen Behandlungsstuhl zugeführt wird.

9. Vorrichtung nach einem der vorstehenden Ansprüche, dadurch gekennzeichnet, daß, ausgehend vom Kanal (21), der den Reinigungsmittelsprühnebel führt, eine Abzweigung (32) zu einem Ringkanal (33) und mehreren Düsen (34), die in der Stirnseite der Instrumentenaufnahme (17) münden, vorgesehen ist.

10. Vorrichtung nach einem der vorstehenden Ansprüche, dadurch gekennzeichnet, daß die Druckluftzufuhr (18) des Instrumentenanschlusses (17) in einen Ringraum führt, der zwischen Lagern (35) der Welle, auf der die Turbine (19) sitzt, gebildet ist.
